# EUROPÄISCHE PATENTANMELDUNG

(11) **EP 1 489 047 A1**
(43) Veröffentlichungstag der Anmeldung: **22.12.2004**
(21) Anmeldenummer: 04012170.9
(22) Anmeldetag: 22.05.2004
(51) Int. Cl.: C02F 1/00

(54) **Verfahren und Vorrichtung zur Behandlung von Trinkwasser**

(30) Priorität: 21.06.2003 DE 10327984
(71) Anmelder: Judo Wasseraufbereitung GmbH, D-71364 Winnenden (DE)
(72) Erfinder:
(74) Vertreter: Kohler Schmid Möbus

(57) **Zusammenfassung**

Ein Verfahren zur Behandlung von Wasser, insbesondere von Trinkwasser in Haushalten, mittels einer Wasseraufbereitungsanlage (1), die ein Gehäuse (2) mit einem Einlass (3) für zu behandelndes Wasser und einem Auslass (4) für behandeltes Wasser sowie eine in einem Volumen des Gehäuses (2) befindliche Schüttung aus Edelsteinen und/oder Halbedelsteinen (5) umfasst, ist dadurch gekennzeichnet, dass die Edelsteine und/oder Halbedelsteine (5) durch Zuführung von Energie aus einer Energiequelle (6) vor oder während der Wasserbehandlung energetisiert werden. Damit können auch größere Mengen Trinkwasser mittels alleiniger Behandlung durch Edelsteine und/oder Halbedelsteine effektiv energetisiert und vitalisiert werden. Wegen des ästhetischen Effekts ist die Schüttung aus Edelsteinen und/oder Halbedelsteinen (5) von außerhalb des Gehäuses (2) zumindest teilweise sichtbar ist.

## Beschreibung

Die Erfindung betrifft ein Verfahren zur Behandlung von Wasser, insbesondere von Trinkwasser in Haushalten, mittels einer Wasseraufbereitungsanlage, die ein Gehäuse mit einem Einlass für zu behandelndes Wasser und einem Auslass für behandeltes Wasser sowie eine in einem Volumen des Gehäuses befindliche Schüttung aus Edelsteinen und/oder Halbedelsteinen umfasst.

Eine Wasserbehandlung mit Steinen, insbesondere mit Quarz ist beispielsweise aus der deutschen Gebrauchsmusterschrift DE 202 01 117 U1 bekannt. Dort ist ein Gerät zur Wasservitalisierung beschrieben, bei dem Schwingungen auf das Wasser übertragen werden. Als Speichermedium für diese Schwingungen dienen verschiedene um eine Wasserleitung gewickelte metallische und nichtmetallische Materialien wie Aluminium oder Quarz.

Geräte zur Energetisierung und Vitalisierung von Wasser sind seit langem in vielfältigen Ausführungen bekannt.

In der DE 44 38 340 A1 wird beispielsweise vorgeschlagen, Speicher-Substrate aus Kalkstein, Marmor, Granit, Quarzsand oder Zeolith in einem geschlossenen Gehäuse aufzuladen und zur Übertragung von Schwingungen auf Wasser zu verwenden.

Die Beeinflussung des Wassers nach diesen Methoden ist begrenzt, da einerseits das Wasser nicht direkt durch das Speichermedium fließt und andererseits die genannten Materialien wenig Schwingungsenergie speichern können und diese relativ schnell wieder verlieren.

Als besonders geeignet zur Energetisierung und Vitalisierung von Wasser haben sich Edelsteine und Halbedelsteine erwiesen.

So wird in DE 199 54 051 A1 ein Wasser-Aktivator beschrieben, bei dem einer aktivierend wirkenden Quarzfüllung Bernstein als Additiv zugegeben wird. Die Mischung wird dabei nicht durchströmt.

DE 42 44 658 A1 beschreibt eine Vorrichtung zur Vitalisierung von Wasser mittels eines Edelsteines oder Halbedelsteines am Auslauf einer Wasserarmatur.

Eine kombinierte Wasserbehandlung wird in DE 42 02 809 A1 und in der DE 42 44 659 A1 dargestellt. Dabei wird das Wasser mittels Pumpen oder Rührern mechanisch vorbehandelt, die erzeugte Wasserströmung umspült anschließend einen oder mehrere Edelsteine oder Halbedelsteine.
Nachteilig ist hier das begrenzte Volumen des Behandlungsbehälters bzw. der hohe technische Aufwand des Pumpensystems.

Die DE 298 17 677 U1 beschreibt einen physikalischen Wasseraufbereiter mit einem Zweikammer-Kristall-System. Dabei wird das Wasser sowohl magnetisch als auch mit Bergkristallen behandelt. Die Bergkristalle sind hier in einer Kristallkammer eingebaut ohne dem Wasserfluss ausgesetzt zu sein.

Die DE 201 16 136 schließlich zeigt ein Wasseraufbereitungsgerät, bei dem die Effektivität der Behandlung durch eine mehrstufige Behandlungskombination erhöht wird. Dabei erfährt das Wasser verschiedene Verwirbelungen und eine magnetische Vorbehandlung bevor es dann über eine Wendel auf die Edelsteine oder Halbedelsteine trifft.

Nachteilig bei den genannten Geräten ist der begrenzte Energievorrat der Edelsteine und Halbedelsteine sowie dessen Abnahme während der Wasserbehandlung. Dies bedeutet, dass mit Edelsteinen und/oder Halbedelsteinen allein ohne eine zusätzliche magnetische und/oder mechanische Behandlungsstufe nur eine begrenzte Wassermenge effektiv behandelt werden kann. Darüber hinaus haben Geräte, bei denen der direkte Kontakt der Edelsteine und Halbedelsteine mit dem behandelten Wasser fehlt, einen deutlich geringeren Wirkungsgrad.

Aufgabe der vorliegenden Erfindung ist daher, oben genannte Nachteile zu vermeiden und ein Verfahren und eine Vorrichtung der eingangs genannten Art vorzustellen, mit denen auch größere Mengen Trinkwasser mittels alleiniger Behandlung durch Edelsteine und/oder Halbedelsteine effektiv energetisiert und vitalisiert werden können.

Diese Aufgabe wird erfindungsgemäß auf überraschend einfache, aber wirkungsvolle Weise dadurch gelöst, dass die Edelsteine und/oder Halbedelsteine durch Zuführung von Energie aus einer Energiequelle energetisiert werden.

Dadurch erlangen die Edelsteine einen erhöhten Energiegehalt und können das zu behandelnde Wasser effektiv energetisieren und vitalisieren, ohne dass eine zusätzliche Behandlungsstufe erforderlich ist.

Die Energetisierung der Edelsteine und/oder Halbedelsteine kann außerhalb der Wasseraufbereitungsanlage zeitlich vor der Wasseraufbereitung erfolgen. Bevorzugt ist jedoch eine Verfahrensvariante, bei der die Energetisierung der Edelsteine und/oder Halbedelsteine innerhalb des Gehäuses der Wasseraufbereitungsanlage erfolgt. Dies ist äußerst praktisch, da "erschöpfte" Edelsteine und/oder Halbedelsteine in der Anlage sofort wieder aufgeladen werden können und die Behandlung des Wassers dafür nicht unterbrochen werden muss.

Bei einer bevorzugten Weiterbildung dieser Verfahrensvariante erfolgt die Energetisierung der Edelsteine und/oder Halbedelsteine zeitgleich mit der Wasseraufbereitung.

Vorteilhaft ist auch eine Verfahrensvariante, bei der die Energetisierung der Edelsteine und/oder Halbedelsteine wiederholt für Zeiträume im Bereich von 10sec bis 1h, vorzugsweise 1min bis 15min durchgeführt wird. Damit ist eine stets gleichbleibende Qualität der Edelsteine und/oder Halbedelsteine und somit der Behandlung des Wassers gewährleistet.

Bei einer weiteren, besonders bevorzugten Variante des erfindungsgemäßen Verfahrens wird als Energiequelle zur Energetisierung der Edelsteine und/oder Halbedelsteine eine Strahlungsquelle für elektromagnetische Wellen verwendet. Derartige Strahlungsquellen sind technisch in sehr großer Vielfalt und in sehr unterschiedlichen Bereichen des elektromagnetischen Spektrums erhältlich.

Bei einer besonders vorteilhaften Ausführungsform emittiert die Strahlungsquelle Licht im sichtbaren Spektralbereich. Die Edelsteine und/oder Halbedelsteine werden durch das Licht besonders gut energetisch aufgeladen.

Bei Weiterbildungen dieser Ausführungsform wird als Strahlungsquelle eine im Handel preisgünstig erhältliche Leuchtdiode, vorzugsweise in Verbindung mit einem ebenfalls preisgünstig erhältlichen Lichtleiterelement verwendet.

Alternativ oder ergänzend kann als Strahlungsquelle aber auch eine Glühlampe oder eine Glühbirne verwendet werden.

Bei weiteren Varianten der Erfindung kommen Strahlungsquellen zur Anwendung, die Licht im ultravioletten Spektralbereich emittieren.

Es können aber auch Strahlungsquellen verwendet werden, welche Licht im infraroten Spektralbereich emittieren.

Besonders bevorzugt ist eine Weiterbildung, bei der die Strahlungsquelle eine Laserlichtquelle, insbesondere eine Laserdiode umfasst. Hierdurch wird eine besonders intensive Energetisierung der Edelsteine und/oder Halbedelsteine ermöglicht. Insbesondere Laserdioden sind zudem in sehr kompakter Ausführung und äußerst preiswert auf dem Markt erhältlich.

Bei anderen Varianten kann die Energetisierung der Edelsteine und/oder Halbedelsteine thermisch durchgeführt werden. Heizquellen sind besonders einfach und kostengünstig im Gehäuse der Wasseraufbereitungsanlage integrierbar.

Als Energiequelle zur Energetisierung der Edelsteine und/oder Halbedelsteine kann beispielsweise ein Mikrowellenemitter, insbesondere ein Klystron, verwendet werden.

Bei einer besonders preisgünstigen Alternative kann als Energiequelle aber auch eine, insbesondere elektrisch betriebene, Heizeinrichtung, vorzugsweise eine Heizwendel, verwendet werden.

Bei einer weiteren Verfahrensvariante wird die Energetisierung der Edelsteine und/oder Halbedelsteine mittels elektrischer und/oder magnetischer Wechselfelder durchgeführt. Diese Felder dienen dabei in erster Linie nicht der direkten Wasserbehandlung, sondern der Vorbehandlung der Steine. Eine physikalische Wasserbehandlung kann aber zwanglos damit einhergehen.

Bei einer weiteren Variante der Erfindung wird die Energetisierung der Edelsteine und/oder Halbedelsteine mittels mechanischer Reibung an den Edelsteinen und/oder Halbedelsteinen durchgeführt. Hierzu ist beispielsweise denkbar, dass eine Bürste oder ein anderes flexibles Material von Zeit zu Zeit über die Oberfläche der Steine streicht.

Bei einer weiteren Variante des erfindungsgemäßen Verfahrens schließlich erfolgt die Energetisierung der Edelsteine und/oder Halbedelsteine mittels Ultraschall aus einer Ultraschallquelle. Derartige Ultraschalquellen sind in vielfältigen kompakten Formen auf dem Markt erhältlich und können einfach in das Gehäuse der Anlage integriert werden.

In den Rahmen der vorliegenden Erfindung fällt auch eine Wasseraufbereitungsanlage zur Behandlung von Wasser, insbesondere von Trinkwasser in Haushalten, die ein Gehäuse mit einem Einlass für zu behandelndes Wasser und einem Auslass für behandeltes Wasser sowie eine in einem Volumen innerhalb des Gehäuses befindliche Schüttung aus Edelsteinen und/oder Halbedelsteinen umfasst.

Erfindungsgemäß zeichnet sich diese Anlage dadurch aus, dass eine Energiequelle vorgesehen ist, mittels derer die Edelsteine und/oder Halbedelsteine durch Zuführung von Energie vor oder während der Wasserbehandlung energetisiert werden können.

Bei einer Ausführungsform der erfindungsgemäßen Wasseraufbereitungsanlage ist die Energiequelle zur Energetisierung der Edelsteine und/oder Halbedelsteine außerhalb des Gehäuses, insbesondere mit Abstand zum Gehäuse angeordnet. Dadurch erhält man eine hohe Freiheit für unterschiedliche Anordnungen und Konstruktionen. Darüber hinaus muss für diese Ausführungsform die Energiequelle nicht wasserresistent gestaltet oder angeordnet sein.

Besonders bevorzugt ist jedoch eine Ausführungsform der Erfindung, bei der die Energiequelle zur Energetisierung der Edelsteine und/oder Halbedelsteine innerhalb des Gehäuses angeordnet ist. Bei einer im Gehäuse der Anlage integrierten Energiequelle ist die Vorbehandlung der Steine aufgrund der Nähe der Energiequelle zu den Steinen besonders effektiv. Außerdem ist auf diese Weise eine außerordentlich kompakte und formschöne Bauweise möglich.

Eine weitere Ausführungsform der erfindungsgemäßen Wasseraufbereitungsanlage zeichnet sich dadurch aus, dass die Schüttung eine Mischung aus unterschiedlichen Arten von Edelsteinen und/oder Halbedelsteinen enthält. Es ist bekannt, dass unterschiedliche Edelsteine unterschiedliche Einflüsse auf ihre Umgebung ausüben. Durch geeignete Kombinationen kann das Wasser multifunktionell vorbehandelt werden.

Als besonders zweckmäßig hat sich eine Ausführungsform der erfindungsgemäßen Wasseraufbereitungsanlage erwiesen, bei der die Edelsteine und/oder Halbedelsteine der Schüttung Durchmesser zwischen 1/2cm und 5cm, vorzugsweise zwischen 1cm und 3cm aufweisen.

Ganz besonders bevorzugt ist auch eine Ausführungsform der Erfindung, bei der die Schüttung aus Edelsteinen und/oder Halbedelsteinen von außerhalb des Gehäuses zumindest teilweise sichtbar ist. Auf diese Weise kann die Wasseraufbereitungsanlage auch als ästhetisches Wohnelement eingesetzt werden, wobei durch Wahl der jeweils eingefüllten Edelsteine und/oder Halbedelsteine die unterschiedlichsten optischen Wirkungen erzielt werden können.

Bei einer besonders vorteilhaften Weiterbildung dieser Ausführungsform ist vorgesehen, dass die Energiequelle zur Energetisierung der Edelsteine und/oder Halbedelsteine eine Lichtquelle umfasst, die zumindest teilweise im sichtbaren Spektralbereich, insbesondere farbiges Licht emittiert. Hierdurch lassen sich wunderschöne optische Effekte erzielen.

Eine andere Weiterbildung dieser Ausführungsform sieht vor, dass die Energiequelle zur Energetisierung der Edelsteine und/oder Halbedelsteine eine Strahlungsquelle umfasst, die im nicht-sichtbaren Bereich des elektromagnetischen Spektrums emittiert, und dass zumindest einige der Edelsteine und/oder Halbedelsteine in der Schüttung so ausgewählt sind, dass sie aufgrund der unsichtbaren Strahlung aus der Energiequelle im sichtbaren Bereich des elektromagnetischen Spektrums zum Leuchten angeregt werden, insbesondere zur Fluoreszenz, Lumineszenz oder Phosphoreszenz.

Eine besonders schöne ästhetische Wirkung wird erzielt, wenn die Energiequelle zur Energetisierung der Edelsteine und/oder Halbedelsteine im Inneren der Schüttung oder zumindest teilweise von den Edelsteinen und/oder Halbedelsteinen der Schüttung umgeben angeordnet ist. Dadurch werden die Edelsteine auf effektvolle Weise von innen her zu einem für den Betrachter geheimnisvoll wirkenden Leuchten gebracht.

Die oben beschriebenen Lichteffekte können bei der erfindungsgemäßen Wasseraufbereitungsanlage per Hand, aber auch durch eine elektronische Steuerung, insbesondere durch eine automatische Zeitschaltung, geregelt oder verändert werden.

Durch die Verwendung von Lichtleitern kann das Licht auch von außen ohne große Probleme in die Schüttung der Edelsteine und/oder Halbedelsteine eingebracht werden.

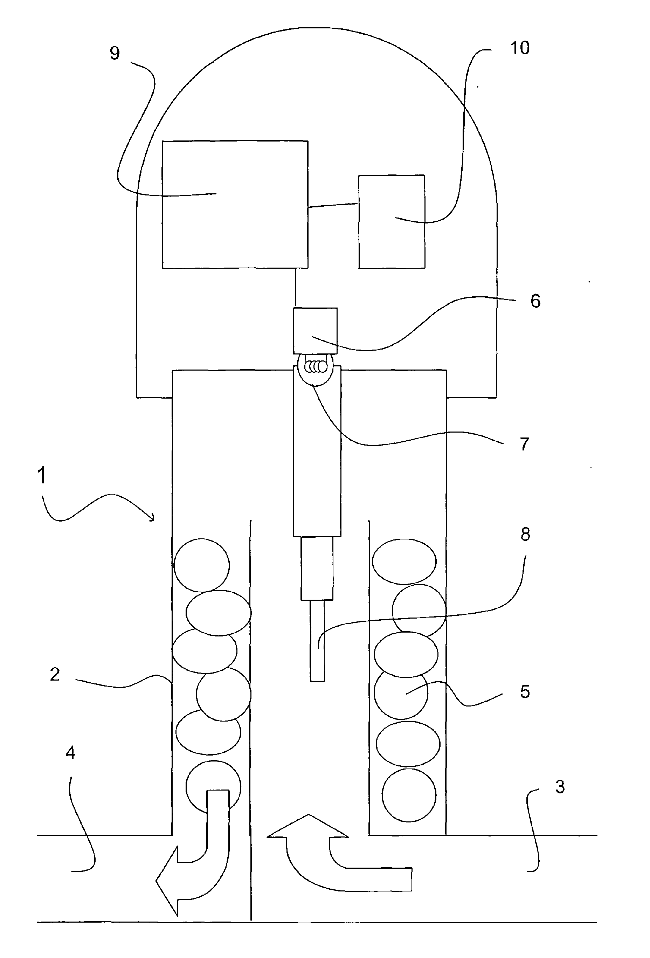

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert.

Die Figur zeigt einen schematischen Vertikalschnitt durch eine Ausführungsform der erfindungsgemäßen Vorrichtung.

Diese Ausführungsform umfasst eine Wasseraufbereitungsanlage 1 mit einem Gehäuse 2, welches einen Einlass 3 für den Zufluss von zu behandelndem Wasser sowie einen Auslass 4 für den Abfluss von behandeltem Wasser aus der Wasseraufbereitungsanlage aufweist. Im Inneren des Gehäuses 2 ist eine Schüttung von Edelsteinen und/oder Halbedelsteinen 5 vorgesehen, die im Betrieb der Anlage von dem zu behandelnden Wasser durchströmt wird.

Die Edelsteine und/oder Halbedelsteine 5 der Schüttung können Durchmesser zwischen ½ cm und 5 cm aufweisen; vorzugsweise liegt der mittlere Durchmesser bei ca. 2 cm.

Um unterschiedliche energetische und vitalisierende Wirkungen sowie unterschiedliche ästhetische Effekte hervorzurufen, kann die Schüttung eine Mischung aus verschiedenen Arten von Edelsteinen und/oder Halbedelsteinen 5 enthalten.

Um die Edelsteine und/oder Halbedelsteine 5 in die Lage zu versetzen, das zu behandelnde Trinkwasser zu energetisieren und vitalisieren, ist eine Energiequelle 6 vorgesehen, die im vorliegenden Beispiel eine Lichtquelle 7 umfasst. Diese kann konkret als Glühlampe oder Glühbirne, aber auch als Leuchtdiode, Laserdiode oder sonstige Strahlungsquelle zur Emission elektromagnetischer Wellen ausgestaltet sein.

Im gezeigten Ausführungsbeispiel wird das Licht aus der Lichtquelle 7 über ein Lichtleiterelement 8 in einen Raum eingeleitet, der von der Schüttung der Edelsteine und/oder Halbedelsteine 5 zumindest teilweise umgeben ist.

Das Lichtleiterelement 8 kann dabei farblich an die Farbe der verwendeten Edelsteine und/oder Halbedelsteine 5 angepasst sein, um einen abgestimmten ästhetischen Gesamteffekt zu erzielen.

Damit eine ausreichende Wirkung auf die Steine der Schüttung erzielt wird, muss in dem vorliegenden Beispiel zumindest der innere Teil des Gehäuses 2 transparent gestaltet sein. Aus ästhetischen Gründen empfiehlt es sich aber auch, den äußeren Teil des Gehäuses 2 durchsichtig zu gestalten, damit das Leuchten der bestrahlten Steine auch von außen beobachtet werden kann.

Wenn die Lichtquelle 7 im sichtbaren Spektralbereich des elektromagnetischen Spektrums emittiert, kann auch farbiges Licht zur Behandlung der Edelsteine und zur Erzeugung besonderer ästhetischer Effekte eingesetzt werden. Beispielsweise kann die Lichtquelle 7 auch einen Laser umfassen.

Besondere optische Wirkungen können erzielt werden, wenn das emittierte Licht im nicht-sichtbaren Bereich des elektromagnetischen Spektrums, insbesondere im ultravioletten oder im infraroten Spektralbereich liegt. Bei geeigneter Auswahl der Edelsteine und/oder Halbedelsteine 5 in der Schüttung kann diese unsichtbare Strahlung aus der Energiequelle 6 so umgewandelt werden, dass die Edelsteine und/oder Halbedelsteine 5 der Schüttung zum Leuchten im sichtbaren Bereich des elektromagnetischen Spektrums, insbesondere zur Fluoreszenz, Lumineszenz oder Phosphoreszenz angeregt werden. Da die Lichtquelle 7 und auch die Lichtleiterelemente 8 dann für den außenstehenden Betrachter direkt nicht sichtbar sind, scheinen die Edelsteine und/oder Halbedelsteine 5 von innen heraus zu leuchten, was eine besonders schöne ästhetische Wirkung entfaltet und auf den Betrachter geheimnisvoll wirkt.

Über eine elektronische Steuerungseinrichtung 9, insbesondere eine Zeitschaltung, kann die Energiequelle 6 mit einer im vorliegenden Beispiel vorgesehenen Batterie 10 oder einer anderen Stromversorgung verbunden werden. Es empfiehlt sich, über die elektronische Steuerung 9 die Energetisierung der Edelsteine und/oder Halbedelsteine der Schüttung wiederholt für Zeiträume im Bereicht von 10 sec bis 1 h, vorzugsweise zwischen 1 min bis 15 min automatisch durchzuführen.

Bei in der Zeichnung nicht dargestellten Ausführungsformen der Erfindung kann anstelle einer Lichtquelle 7 auch eine Einrichtung zur Erzeugung elektrischer und/oder magnetischer Wechselfelder, insbesondere eine Magnetspulenanordnung, vorgesehen sein. Weitere Ausführungsformen können als Energiequelle 6 zur Energetisierung der Edelsteine und/oder Halbedelsteine 5 auch eine Ultraschallquelle, einen Mikrowellenemitter, insbesondere ein Klystron, eine insbesondere elektrisch betriebene Heizeinrichtung, vorzugsweise eine Heizwendel, oder eine mechanische Einrichtung zur Erzeugung von Oberflächenreibung an den Edelsteinen und/oder Halbedelsteinen 5 der Schüttung umfassen.

Während im gezeigten Ausführungsbeispiel die Energiequelle 6 zur Energetisierung der Edelsteine und/oder Halbedelsteine 5 innerhalb des Gehäuses 2 angeordnet ist, kann bei anderen Ausführungsformen der Erfindung die Energiequelle auch außerhalb des Gehäuses, insbesondere mit Abstand zum Gehäuse, angeordnet sein. Die Energetisierung der Edelsteine und/oder Halbedelsteine 5 kann außerhalb der Wasseraufbereitungsanlage 1 zeitlich vor der Wasseraufbereitung erfolgen. Im gezeigten Ausführungsbeispiel erfolgt sie jedoch innerhalb des Gehäuses 2 der Wasseraufbereitungsanlage 1 und zeitlich während der Wasseraufbereitung.

## Patentansprüche

1. Verfahren zur Behandlung von Wasser, insbesondere von Trinkwasser in Haushalten, mittels einer Wasseraufbereitungsanlage (1), die ein Gehäuse (2) mit einem Einlass (3) für zu behandelndes Wasser und einem Auslass (4) für behandeltes Wasser sowie eine in einem Volumen des Gehäuses (2) befindliche Schüttung aus Edelsteinen und/oder Halbedelsteinen (5) umfasst,
**dadurch gekennzeichnet,**
**dass** die Edelsteine und/oder Halbedelsteine (5) durch Zuführung von Energie aus einer Energiequelle (6) energetisiert werden.

2. Verfahren nach Anspruch 1, **dadurch gekennzeichnet, dass** die Energetisierung der Edelsteine und/oder Halbedelsteine (5) außerhalb der Wasseraufbereitungsanlage (1) zeitlich vor der Wasseraufbereitung. erfolgt.

3. Verfahren nach Anspruch 1, **dadurch gekennzeichnet, dass** die Energetisierung der Edelsteine und/oder Halbedelsteine (5) innerhalb des Gehäuses (2) der Wasseraufbereitungsanlage (1), vorzugsweise während der Wasseraufbereitung erfolgt.

4. Verfahren nach einem der vorhergehenden Ansprüche, **dadurch gekennzeichnet, dass** als Energiequelle (6) zur Energetisierung der Edelsteine und/oder Halbedelsteine (5) eine Strahlungsquelle für elektromagnetische Wellen verwendet wird.

5. Verfahren nach Anspruch 4, **dadurch gekennzeichnet, dass** als Strahlungsquelle eine Leuchtdiode, vorzugsweise in Verbindung mit einem Lichtleiterelement (8) verwendet wird.

6. Verfahren nach einem der vorherigen Ansprüche, **dadurch gekennzeichnet, dass** die Energetisierung der Edelsteine und/oder Halbedelsteine (5) mittels elektrischer und/oder magnetischer Wechselfelder durchgeführt wird.

7. Wasseraufbereitungsanlage (1) zur Behandlung von Wasser, insbesondere von Trinkwasser in Haushalten, die ein Gehäuse mit einem Einlass (3) für zu behandelndes Wasser und einem Auslass (4) für behandeltes Wasser sowie eine in einem Volumen innerhalb des Gehäuses (2) befindliche Schüttung aus Edelsteinen und/oder Halbedelsteinen (5) umfasst,
**dadurch gekennzeichnet,**
**dass** eine Energiequelle (6) vorgesehen ist, mittels derer die Edelsteine und/oder Halbedelsteine (5) durch Zuführung von Energie vor oder während der Wasserbehandlung energetisiert werden können.

8. Wasseraufbereitungsanlage nach Anspruch 7, **dadurch gekennzeichnet, dass** die Energiequelle (6) zur Energetisierung der Edelsteine und/oder Halbedelsteine (5) außerhalb des Gehäuses (2), insbesondere mit Abstand zum Gehäuse (2) angeordnet ist.

9. Wasseraufbereitungsanlage nach Anspruch 7, **dadurch gekennzeichnet, dass** die Energiequelle (6) zur Energetisierung der Edelsteine und/oder Halbedelsteine (5) innerhalb des Gehäuses (2) angeordnet ist.

10. Wasseraufbereitungsanlage nach einem der Ansprüche 7 bis 9, **dadurch gekennzeichnet, dass** die Schüttung aus Edelsteinen und/oder Halbedelsteinen (5) von außerhalb des Gehäuses (2) zumindest teilweise sichtbar ist.

11. Wasseraufbereitungsanlage nach Anspruch 10, **dadurch gekennzeichnet, dass** die Energiequelle (6) zur Energetisierung der Edelsteine und/oder Halbedelsteine (5) eine Lichtquelle (7) umfasst, die zumindest teilweise im sichtbaren Spektralbereich, insbesondere farbiges Licht emittiert.

12. Wasseraufbereitungsanlage nach Anspruch 10, **dadurch gekennzeichnet, dass** die Energiequelle (6) zur Energetisierung der Edelsteine und/oder Halbedelsteine (5) eine Strahlungsquelle umfasst, die im nicht-sichtbaren Bereich des elektromagnetischen Spektrums emittiert, und dass zumindest einige der Edelsteine und/oder Halbedelsteine (5) in der Schüttung so ausgewählt sind, dass sie aufgrund der unsichtbaren Strahlung aus der Energiequelle (6) im sichtbaren Bereich des elektromagnetischen Spektrums zum Leuchten angeregt werden, insbesondere zur Fluoreszenz, Lumineszenz oder Phosphoreszenz.

13. Wasseraufbereitungsanlage nach einem der Ansprüche 7 bis 12, **dadurch gekennzeichnet, dass** zur Weiterleitung von Strahlung aus der Energiequelle (6) ein Lichtleiterelement (8) vorgesehen ist.

14. Wasseraufbereitungsanlage nach einem der Ansprüche 7 bis 13, **dadurch gekennzeichnet, dass** die Energiequelle (6) zur Energetisierung der Edelsteine und/oder Halbedelsteine (5) im Inneren der Schüttung oder zumindest teilweise von den Edelsteinen und/oder Halbedelsteinen (5) der Schüttung umgeben angeordnet ist.

15. Wasseraufbereitungsanlage nach einem der Ansprüche 7 bis 14, **dadurch gekennzeichnet, dass** eine elektronische Steuerungseinrichtung (9), insbesondere eine Zeitschaltung zur automatischen Ansteuerung der Energiequelle (6) vorgesehen ist.
